# EUROPÄISCHE PATENTSCHRIFT

(11) **EP 0 914 302 B1**
(45) Veröffentlichungstag und Bekanntmachung des Hinweises auf die Patenterteilung: **27.06.2001**
(21) Anmeldenummer: 98924088.2
(22) Anmeldetag: 28.03.1998
(51) Int. Cl.: C03C 17/30, C03C 17/34

(54) **VERFAHREN ZUR HERSTELLUNG OBERFLÄCHENVERSIEGELTER HOHLGLASBEHÄLTER UND HOHLGLASBEHÄLTER**
PROCESS FOR MANUFACTURING SURFACE-SEALED HOLLOW GLASS CONTAINERS AND GLASS CONTAINERS
PROCEDE DE FABRICATION DE CONTENEURS EN VERRE CREUX A SURFACE IMPERMEABILISEE ET CONTENEURS EN VERRE

(30) Priorität: 04.04.1997 DE 19714020; 04.03.1998 DE 19809057
(43) Veröffentlichungstag der Anmeldung: 12.05.1999
(73) Patentinhaber: Degussa AG, 40474 Düsseldorf (DE); Oberland Glas AG, 88410 Bad Wurzach (DE)
(72) Erfinder: JENKNER, Peter, D-79618 Rheinfelden (DE); LOMÖLDER, Rainer, D-48153 Münster (DE); SPEIER, Peter, D-45768 Marl (DE); STÄBLER, Elmar, D-88410 Bad Wurzach (DE); FICKLER, Alois, D-87772 Pfaffenhausen (DE); BUCHMAYER, Gerd, D-88410 Bad Wurzach (DE)
(86) Internationale Anmeldenummer: EP9801841
(87) Internationale Veröffentlichungsnummer: WO9845216

(56) Entgegenhaltungen:
- EP-A- 0 437 902
- WO-A-95/00259
- WO-A-97/47563
- GB-A- 2 021 124
- US-A- 3 873 352
- US-A- 4 130 677
- PATENT ABSTRACTS OF JAPAN vol. 007, no. 022 (C-148), 28.Januar 1983 & JP 57 179053 A (ASAHI BIIRU KK), 4.November 1982,

## Beschreibung

Die Erfindung betrifft ein Verfahren zur Herstellung oberflächenversiegelter Hohlglasbehälter mit Hilfe eines speziellen Kaltendvergütungsmittels.

Es ist bekannt, im Herstellungsprozeß der Hohlglasbehälter diese einer Oberflächenbehandlung zu unterziehen, mit der äußere Schäden, wie Mikrorisse, überdeckt und weitere Schäden minimiert werden sollen. So wird bereits unmittelbar nach der Produktionsmaschine die sogenannte Heißendvergütung auf die 500 bis 550 °C heiße Glasoberfläche als dünne Schicht aufgebracht. Hierbei handelt es sich insbesondere um Titan- und Zinnchloride. Diese erzeugen auf den Glasoberflächen eine Titan- oder Zinndioxidschicht, wobei das freiwerdende Chlor in das Abgas übergeht. Die Aufbringung des Heißendvergütungsmittels erfolgt durch Bedampfung oder Sprühzerstäubung.

Nach der Heißendvergütung durchlaufen die Hohlglasbehälter einen Kühlofen, in dem sie zur Vermeidung von schädlichen Spannungen langsam abgekühlt werden.

Am sogenannten Austragsende des Kühlofens werden die zuvor heißendverguteten Hohlglasbehälter entweder mittels Bedampfung oder durch Sprühzerstäubung kaltendvergütet. Dadurch entsteht die fur den weiteren Ablauf in der Glashütte und im Abfüllbetrieb notwendige Glätte.

Die häufigsten Substanzen, die als Kaltendvergütungsmittel Verwendung finden, sind Tenside, Fettsäureprodukte, partielle Fettsäureester, Esterwachsemulsionen und unterschiedliche Polyethylen-Dispersionen.

Ein Beschichtungsverfahren, bei dem zuerst eine Heißendvergütung durchgeführt wird und anschließend als Kaltendvergutungsmittel ein Olefinpolymerisat, ein Polyurethan, ein Polystyrol oder ein Essigsäuresalz eines Alkylamins aufgesprüht wird, ist aus der DE-PS 12 91 448 bekannt. Die so beschichteten Flaschen genügen jedoch nicht allen Anforderungen.

Eine gewisse Verbesserung der Kratzfestigkeit wird erzielt, wenn die als Kaltendvergütungsmittel aufgesprühte Polyethylen-Dispersion zusätzlich ein Silan enthält (US-PSS 3 438 801, 3 801 361, 3 873 352, 4 130 677, 4 374 879; EP-A-0 146 142 sowie WO-A-9 747 563). Das Eigenschaftsniveau reicht jedoch noch nicht für alle Anwendungen aus. In der GB-A-2 021 124 enthält das Kaltendvergütungsmittel zusätzlich einen Polyaminoacrylester sowie ein Vernetzerharz.

Eine weitere Entwicklung des Standes der Technik ging dahin, als Kaltendvergütung zuerst die Lösung oder Dispersion eines Silans und anschließend eine weitere Komponente wie z. B. eine Polyethylendispersion aufzusprühen. Hier sei auf die US-PSS 3 438 801, 4 130 677, 4 304 802, 5 567 235 (entspricht der WO-A-95/00259) sowie auf die EP-A-0 146 142 und die EP-A-0 478 154 hingewiesen.

Darüber hinaus ist es bekannt, daß eine Kaltendvergütung auch mit einem Polysiloxan durchgeführt werden kann (US-PS 4 985 286; DE-A-31 44 457; JP-A-57 179 053).

Trotz der beschriebenen Vergütungen, die zwar eine gute Basisfestigkeit der Glasbehälter gewährleisten, nimmt diese jedoch im weiteren Produktionsprozeß und dem anschließenden Gebrauch der Behälter rapide ab. Ursachen für diesen Festigkeitsverlust sind Mikrobeschädigungen, die unvermeidbar während der Formgebung und dem anschließenden Heißendtransport der Glasbehälter entstehen und je nach Beschädigungsgrad, Beschädigungsposition und Behälterbelastung als potentielle Bruchauslöser wirken können.

Eine Aufgabe der vorliegenden Erfindung besteht darin, derartige Mikrobeschädigungen noch im Herstellungsprozeß unschädlich zu machen.

Eine weitere Aufgabe besteht darin, die Hohlkörper bei der anschließenden Handhabung, d. h. auf dem Transportband, beim Abpacken, beim Versand und beim Befüllen, gegen mechanische Einwirkungen auf die Oberfläche unempfindlicher zu machen.
Ein weiterer wesentlicher Gesichtspunkt ist der, daß die Hohlkörper gegenüber dem Stand der Technik eine verbesserte Dauergebrauchsfestigkeit aufweisen sollten. So sollten insbesondere Mehrwegflaschen für kohlensäurehaltige Getränke auch nach vielen Rückläufen noch eine ausreichend hohe Festigkeit und insbesondere Innendruckfestigkeit aufweisen.

Zusätzlich sollten die Hohlglasbehälter eine verbesserte chemische Resistenz aufweisen, insbesondere gegenüber Wasser und Waschlaugen.

Darüber hinaus sollten die Trocken- und die Naßkratzfestigkeit gesteigert und die Durchkratzeigenschaften verbessert werden.

Insgesamt sollten die mechanischen Eigenschaften gegenüber dem Stand der Technik so verbessert werden, daß bei gleicher Festigkeit das Behältergewicht reduziert werden kann.

Die mechanischen Eigenschaften sollten gegenüber dem Stand der Technik weiterhin so verbessert werden, daß bei gleicher Endfestigkeit auf eine Heißendvergütung verzichtet werden kann.

Gegenüber der üblicherweise durchgeführten Vergütung sollte eine verbesserte Etikettierung, auch mit herkömmlichen Leimen, möglich sein.

Diese Verbesserungen sollten mit einem möglichst einfachen Verfahren erzielt werden, das in üblichen Produktionsanlagen ohne nennenswerte zusätzliche Investitionskosten durchgeführt werden kann. Insbesondere sollte hierbei die Notwendigkeit eines Curingschrittes vermieden werden, da dies höhere Investitions- und Verfahrenskosten bedeuten würde.

Insgesamt sollte die erfindungsgemäße Wirkung unmittelbar nach Durchführung der Verfahrensmaßnahme eintreten, d. h. ohne nennenswerte Wartezeit, so daß die Schutzwirkung beim anschließenden Weitertransport auf dem Band ohne Verzögerung auftritt.

Zur Lösung dieser Aufgaben wird ein Verfahren zur Herstellung oberflächenversiegelter Hohlglasbehälter vorgeschlagen, bei dem im Herstellungsprozeß im Bereich des Austritts des Kühlofens, der einer Maschine zur Herstellung von Hohlglasbehältern nachgeordnet ist, eine Beschichtung der Hohlglasbehälter mittels eines wasserbasierenden Kaltendvergutungsmittels erfolgt,
dadurch gekennzeichnet,
daß das Kaltendvergütungsmittel im wesentlichen folgende Komponenten enthält:
I. Eine wasserbasierende organopolysiloxanhaltige Zusammensetzung, hergestellt aus
   a) Q Molen eine funktionelle Gruppe tragender Alkoxysilane der allgemeinen Formel

      A-Si(R¹)_{y}(OR*)_{3-y} I

      und
   b) M Molen Alkoxysilane, ausgewählt aus
      α) Trialkoxysilanen der allgemeinen Formel

         R²-Si(OR**)₃ II

         und/oder
      β) Dialkoxysilanen der allgemeinen Formel

         R³R⁴Si(OR***)₂ III

         und/oder
      γ) Tetraalkoxysilanen der allgemeinen Formel

         Si(OR****)₄, IV
   wobei A einen Substituenten bedeutet, der mindestens eine direkt oder über einen aliphatischen oder aromatischen Kohlenwasserstoffrest mit Silicium verbundene Amino-, Alkylamino-, Dialkylamino-, Amido-, Epoxy-, Acryloxy-, Methacryloxy-, Cyano-, Isocyanato-, Ureido-, Thiocyanato-, Mercapto-, Sulfan- oder Halogengruppe besitzt,
   R¹ = Methyl, Ethyl oder A (wie vorstehend definiert),
   y = 0 oder 1, R*, R**, R*** und R**** sind unabhängig voneinander eine Alkylgruppe mit 1 bis 8 C-Atomen oder eine entsprechende Alkylgruppe, die mit einem Alkyl[(poly)ethylenglykol]-Rest substituiert ist,
   R², R³ und R⁴ sind unabhängig voneinander eine Alkyl-, Alkenyl-, Alkinyl-, Cycloalkyl-, Cycloalkenyl- oder aromatische Gruppe mit jeweils maximal 18 C-Atomen oder eine derartige Gruppe, die teil- oder perfluoriert und/oder mit Alkyloxy- und/oder mit Aryloxygruppen substituiert ist,
   im molaren Verhältnis 0 ≤ M/Q ≤ 20,
   wobei im Gemisch der Silane I bis IV durchschnittlich mindestens 2,4 Alkoxygruppen OR*, OR**, OR*** bzw. OR**** pro Siliciumatom enthalten sind,
II. Eine siliciumfreie Komponente, ausgewählt aus
   a) einem Wachs und/oder
   b) einem partiellen Fettsäureester und/oder
   c) einer Fettsäure ;
   wobei zusätzlich ein Tensid enthalten sein kann,
weiterhin gekennzeichnet dadurch,
daß das wasserbasierende Kaltendvergütungsmittel einen Trockensubstanzanteil von 0,1 bis 10 Gew.-% besitzt, wobei, bezogen auf Trockensubstanzen, das Gewichtsverhältnis der organopolysiloxanhaltigen Zusammensetzung I zur siliciumfreien Komponente II 0,05 : 1 bis 20 : 1 beträgt und daß die Temperatur der Glasoberfläche beim Auftragen des Kaltendvergütungsmittels mindestens 30°C beträgt.

Gegenstand der Erfindung sind darüber hinaus auch die gemäß diesem Verfahren hergestellten Hohlglasbehälter.

Hohlglasbehälter im Sinne dieser Erfindung sind grundsätzlich jede Art von Verpackungsglas, beispielsweise Flaschen, Konservengläser, Ampullen, Tablettenröhrchen oder Flacons.

Auf die Oberflächen der frisch hergestellten Hohlglasbehälter kann, falls gewünscht, im Bereich des Eintritts des Kühlofens ein an sich bekanntes sogenanntes Heißendvergütungsmittel nach jedem Verfahren des Standes der Technik aufgebracht werden. Angesichts der erfindungsgemäß erzielten enormen Steigerung der Gebrauchsfestigkeit kann aber auch auf die Heißendvergütung verzichtet werden, was nicht nur kostengünstiger ist, sondern auch durch Emissionsreduzierung einen ökologischen Vorteil bietet. Darüber hinaus erhält man bei Fortfall der Heißendvergütung verbesserte Produktionsbedingungen bei der Glasbehälterherstellung durch zusätzlichen Freiraum, wie Verlängerung der Maschinenbandkühlung, der Seitenkühlung, besseren Zugriff, Installationsmöglichkeit für Heißendinspektionsmaschinen usw.

Das eine funktionelle Gruppe tragende Alkoxysilan der allgemeinen Formel

A-Si(R¹)_{y}(OR*)_{3-y} I

kann beispielsweise aus folgenden Verbindungen ausgewählt werden:
3-Aminopropyl-trimethoxysilan, 3-Aminopropyl-triethoxysilan, 3-Pyrrolidinopropyltrimethoxysilan, N-Methyl-3-aminopropyl-trimethoxysilan, 3-Aminopropyl-methyl-diethoxysilan, N-Aminoethyl-3-aminopropyl-trimethoxysilan, N-(Benzylaminoethyl)-3-aminopropyltrimethoxysilan, p-Anilino-triethoxysilan, 4-Aminobutyl-methyl-diethoxysilan, (CH₃O)₃Si-C₃H₆-NH-C₂H₄-NH-C₂H₄-NH₂, 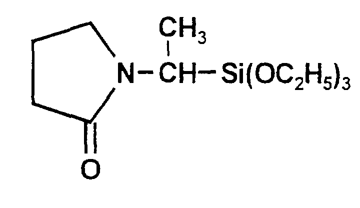 3-Glycidyloxypropyl-trimethoxysilan, 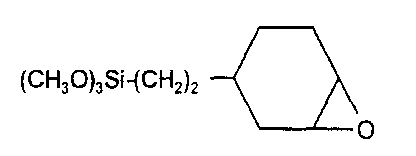 CH₂=C(CH₃)-COO-C₃H₆-Si(OCH₃)₃, CH₂=CH-COO-C₃H₆-Si(OC₂H₅)₃, 3-Cyanopropyltrimethoxysilan, 3-Cyanopropyl-triethoxysilan, 3-Isocyanatopropyl-triethoxysilan, Ureidopropyltrimethoxysilan, 3-Thiocyanatopropyl-trimethoxysilan, 3-Mercaptopropyl-trimethoxysilan, 3-Mercaptopropyl-triethoxysilan, 3-Mercaptopropyl-methyl-dimethoxysilan, 4-Mercaptobutyltrimethoxysilan, 6-Mercaptohexyl-trimethoxysilan, 3-Chloropropyl-trimethoxysilan und (C₂H₅O)₃Si(CH₂)₃-S₄-(CH₂)₃Si(OC₂H₅)₃.

Als Trialkoxysilan der allgemeinen Formel

R²-Si(OR**)₃ II

sind beispielsweise folgende Verbindungen geeignet:
Methyltrimethoxysilan, Methyltriethoxysilan, Ethyltrimethoxysilan, Ethyltriethoxysilan, n-Propyltriethoxysilan, n-Butyltrimethoxysilan, i-Butyltrimethoxysilan, Octyltriethoxysilan, Hexadecyltrimethoxysilan, Stearyltrimethoxysilan, Cyclohexyl-trimethoxysilan, Cyclohexenylethyl-triethoxysilan, Phenyltrimethoxysilan, Phenyltriethoxysilan, Vinyltrimethoxysilan, Vinyltriethoxysilan, Vinyl-tris(2-methoxy-ethoxy)silan, Allyltrimethoxysilan, Allyltriethoxysilan, CF₃CH₂CH₂-Si(OCH₃)₃, CF₃CH₂CH₂-Si(OC₂H₅)₃, C₂F₅CH₂CH₂-Si(OCH₃)₃, C₄F₉CH₂CH₂-Si(OCH₃)₃, n-C₆F₁₃CH₂CH₂-Si(OC₂H₅)₃, n-C₈F₁₇CH₂CH₂-Si(OCH₃)₃ und n-C₁₀F₂₁CH₂CH₂-Si(OCH₃)₃.

Geeignete Dialkoxysilane der allgemeinen Formel

R³R⁴Si(OR***)₂ III

sind beispielsweise Dimethyldimethoxysilan, Dimethyldiethoxysilan, Diethyldimethoxysilan, Methyl-i-butyl-diethoxysilan, Cyclohexyl-methyl-dimethoxysilan, Diphenyldimethoxysilan, Diphenyldiethoxysilan, Methyl-phenyl-dimethoxysilan und CF₃CH₂CH₂Si(CH₃)(OCH₃)₂.

Als Tetraalkoxysilan der allgemeinen Formel

Si(OR****)₄ IV

sind beispielsweise folgende Verbindungen geeignet:
Tetramethoxysilan, Tetraethoxysilan, Tetra(n-propoxy)silan, Tetra(i-propoxy)silan und Tetra(n-butoxy)silan.

Im Gemisch der Silane I bis IV sind durchschnittlich pro Siliciumatom mindestens 2,4 Alkoxygruppen OR*, OR**, OR*** bzw. OR****, bevorzugt mindestens 2,5 Alkoxygruppen und besonders bevorzugt mindestens 2,6 Alkoxygruppen enthalten. Hiermit kann gewährleistet werden, daß die entstehenden organopolysiloxanhaltigen Zusammensetzungen ausreichend wasserlöslich sind. In Abhängigkeit von den Substituenten A und R¹ bis R⁴ können jedoch auch unterhalb des bevorzugten Mindestwertes von 2,4 ausreichend wasserlösliche Systeme erhalten werden. Hier kann der Fachmann auf seine Erfahrungen zurückgreifen und geeignete Systeme gegebenenfalls durch einfache Routineversuche auffinden.

Die wasserbasierende organopolysiloxanhaltige Zusammensetzung (Komponente I) kann aus den Monomeren der Formeln I bis IV durch Mischen der Silanzusammensetzung mit Wasser und Stehenlassen bei Raumtemperatur über mindestens 3 Stunden hergestellt werden. Hierbei sollten pro Mol der eingesetzten Alkoxysilane mindestens 0,5 Mol und bevorzugt mindestens 1 Mol Wasser verwendet werden. Man kann auch von vorneherein die gesamte Wassermenge, die im anwendungsfertigen Kaltendvergütungsmittel enthalten ist, zusetzen. Während der Reifezeit findet eine Vorkondensation zu oligomeren Strukturen statt. Hierbei kann ohne weiteres die siliciumfreie Komponente II bereits zu Anfang zugesetzt werden.

In einer bevorzugten Ausführungsform läßt man die Mischung der Silanzusammensetzung mit Wasser (und gegebenenfalls der Komponente II) mindestens 4 Stunden und besonders bevorzugt mindestens 6 Stunden bei Raumtemperatur (ca. 20 °C) stehen.

Bei höheren oder tieferen Temperaturen muß die Reifezeit entsprechend angepaßt werden. Hierbei kann man sich der Faustregel bedienen, daß eine Temperaturerhöhung um 10 °C in etwa eine Verdoppelung der Reaktionsgeschwindigkeit mit sich bringt.

Die wasserbasierende organopolysiloxanhaltige Zusammensetzung kann aber auch hergestellt werden durch Versetzen der Silanzusammensetzung gemäß den allgemeinen Formeln I bis IV mit 0,5 bis 30 Molen Wasser pro Mol der eingesetzten Alkoxysilane und Entfernen des bei der Umsetzung entstandenen Alkohols durch Destillation. Geeignete Verfahren sowie einige der bei der Reaktion entstehenden oligomeren Strukturen sind in der DE-OS 44 43 824 und der DE-OS 44 43 825 offenbart, auf die hier ausdrücklich Bezug genommen wird.

Die entstandene Zusammensetzung kann homogen oder kolloidal sein. Auch eine Emulsion kann erfindungsgemäß verwendet werden, sofern diese stabil ist. Die einzige Grundvoraussetzung, die erfüllt sein muß, ist die, daß während der Gebrauchsdauer keine Ausfällungen entstehen

Bevorzugt stehen die Alkoxysilane der Formeln II bis IV und die funktionellen Alkoxysilane der Formel I miteinander im Verhältnis 0 ≤ M/Q ≤ 12, besonders bevorzugt im Verhältnis 0,02 ≤ M/Q ≤ 7 und ganz besonders bevorzugt im Verhältnis 0,1 ≤ M/Q ≤ 4.

Die siliciumfreie Komponente (Komponente II) wirkt als Synergist zur Erzielung besonders hoher Festigkeitswerte.

Das als Komponente II verwendete Wachs wird als wäßrige Dispersion eingesetzt. Grundsätzlich kann hierbei jedes in Wasser dispergierbare Wachs verwendet werden.

Natürliche Wachse und synthetische Wachse sind gleichermaßen geeignet. Als natürliche Wachse können sowohl rezente Wachse wie z. B. Bienenwachs, Carnaubawachs oder Candelillawachs als auch fossile Wachse wie z. B. Montanwachs oder dessen Derivate oder Petroleumwachse (sowohl Paraffinwachse als auch Mikrowachse) verwendet werden.

Geeignete synthetische Wachse sind z. B. Fischer-Tropsch-Wachse, Polyolefinwachse wie Polyethylenwachs, Polypropylenwachs, Polyisobutylenwachs, ferner Esterwachs (z. B. Stearinsäureester von Ethylenglykol, Diethylenglykol, Polyethylenglykol, 1.4-Butandiol oder Glycerintristearat), Amidwachse (z. B. N, N'-Distearoylethylendiamin), Polyethylenglykolwachs und Polypropylenglykolwachs.

Unpolare Wachse wie Petroleumwachse, Fischer-Tropsch-Wachse und Polyolefinwachse können zum Zweck besserer Dispergierbarkeit in oxidierter Form eingesetzt werden. Derartige Wachsoxidate sind seit langem Stand der Technik.

Selbstverständlich können auch Mischungen verschiedener Wachse verwendet werden.

Hinsichtlich genauerer Einzelheiten sei auf Ullmann's Encyclopedia of Industrial Chemistry, Vol. A 28, pp. 103 - 163, VCH Verlagsgesellschaft, Weinheim, 1996, verwiesen

Bevorzugt wird im Rahmen der Erfindung ein Polyethylenwachs (im folgenden als "Polyethylen" bezeichnet) eingesetzt. Das verwendete Polyethylen hat im allgemeinen ein zahlenmittleres Molekulargewicht Mₙ im Bereich von 400 bis 20000. Bevorzugt wird ein Polyethylen mit einem Mₙ im Bereich von 500 bis 15000 und besonders bevorzugt mit einem Mₙ im Bereich von 1000 bis 8000 eingesetzt. Das Polyethylen kann durch thermischen und ggf. radikalischen Abbau von hohermolekularem Polyethylen oder auch durch Polymerisation von Ethylen, entweder radikalisch oder mittels eines Übergangsmetallkatalysators, hergestellt werden.

Das Polyethylen kann in gewissem Ausmaß Verzweigungen besitzen, die auch im Falle von Kurzkettenverzweigung durch die Mitverwendung von olefinischen Comonomeren wie Propen, Buten-(1) oder Hexen-(1) hervorgerufen sein können.

Um eine Dispersion herzustellen, die für die Kaltendvergütung geeignet ist, geht man üblicherweise von anoxidiertem Polyethylen aus, welches ggf. zusätzlich verestert und/oder verseift wurde. Hiervon ist eine Vielzahl von Typen im Handel erhältlich.

Darüber hinaus besteht die Möglichkeit, Copolymerisate einzusetzen, die aus mehr als 50 Mol-% Ethylen und weniger als 50 Mol-% eines polaren Monomeren aufgebaut sind, beispielsweise Ethylen-Vinylacetat-Copolymerwachse oder Copolymerisate aus Ethylen und Acrylsäure.

Eine weitere Möglichkeit zur Herstellung von dispergierfähigem Polyethylen besteht darin, Polyethylen in der Schmelze mit einem ungesättigten polaren Monomeren zu pfropfen, beispielsweise mit Maleinsäureanhydrid. Hierzu ist im allgemeinen die Zugabe eines Radikalstarters sinnvoll.

Aus dem so modifizierten Polyethylen kann, ggf. nach weiterer Modifizierung, nach üblichen Methoden eine nichtionogene, anionogene oder kationogene Dispersion hergestellt werden, wobei normalerweise Tenside als Emulgatoren zugesetzt werden.

Der als Komponente II verwendete partielle Fettsäureester kann jeder Typ sein, der üblicherweise für die Kaltendvergütung eingesetzt wird. Als Beispiele seien Glycerinmonoacetat, Glycerinmonostearat, Glycerindistearat sowie gemischte partielle Ester von Mannit mit Stearinsäure und Palmitinsäure genannt.

Geeignete als Komponente II verwendete Fettsäuren haben die Struktur R-COOH, wobei R ein Rest mit 10 bis 22 C-Atomen ist und geradkettig oder verzweigt, gesättigt oder ungesättigt sein kann. Als Beispiele seien Ölsäure, Stearinsäure, Palmitinsäure und Laurylsäure genannt.

Als Zusatz bei Komponente II geeignete Tenside können anionisch, kationisch oder nichtionisch sein. Als anionische Tenside finden beispielsweise Alkalisalze oder Ammoniumsalze von Fettsäuren Verwendung, die mindestens ca. 10 C-Atome enthalten und gesattigt oder ungesättigt sein können. Als Ammoniumsalze sind hierbei Morpholiniumsalze sowie Mono-, Di- oder Triethanolammoniumsalze besonders geeignet. Wegen der lebensmittelrechtlichen Unbedenklichkeit, der guten biologischen Abbaubarkeit sowie der guten anwendungstechnischen Eigenschaften wird insbesondere Kaliumoleat verwendet. Andere geeignete anionische Tenside sind beispielsweise Alkalimetallsalze der Sulfatester von C₈- bis C₁₀-Fettalkoholen oder Alkalimetallsalze der Sulfonsäuren von aliphatischen C₁₂- bis C₂₀-Kohlenwasserstoffen.

Als kationische Tenside können beispielsweise Verbindungen des Typs (RNH₃)⁺CH₃COO⁻ oder (RNH₃)⁺Cl⁻ eingesetzt werden, wobei R ein Kohlenwasserstoffrest mit 8 bis 20 C-Atomen ist. Andere geeignete Ammoniumsalze sind beispielsweise Acetate oder Chloride von [RN(CH₃)₃]⁻ oder [R₂N(CH₃)₂]⁺, wobei R ebenfalls ein C₈- bis C₂₀-Alkyl- oder Aralkylrest ist.

Nichtionische Tenside sind beispielsweise Polyoxyethylenglycerinfettsäureester, Alkylphenolethoxylate mit 5 bis 30, insbesondere mit 6 bis 12 Ethylenoxidgruppen, beispielsweise Octylphenoxy-polyethoxyethanol, Veresterungsprodukte von Fettsäuren, die 7 bis 22 C-Atome enthalten, mit Polyethylenglykol, z. B. von Stearinsäure oder Ölsäure mit PEG-40, Addukte von Ethylenoxid und C₈- bis C₂₀-Alkoholen oder Addukte von Ethylenoxid mit C₈- bis C₂₀-Alkylaminen

Grundsätzlich kann auch jedes andere, hier nicht aufgeführte Tensid verwendet werden Einschränkungen bestehen nur insofern, als das Tensid physiologisch möglichst unbedenklich sowie einigermaßen biologisch abbaubar sein sollte.

Selbstverständlich kann die Komponente II auch eine Mischung verschiedener Substanzen sein, etwa von Wachs, und Tensid, Wachs, Fettsäure und Tensid, partiellem Fettsäureester und Fettsäure oder eine andere Kombination.

Das erfindungsgemäß verwendete Beschichtungsmittel ist ein verdünntes wäßriges System mit einem Trockensubstanzanteil von vorzugsweise 0,1 - 8 Gew.-%, besser von 0,1 - 6 Gew-%, besonders bevorzugt von 0,2 - 5 Gew.-% und insbesondere von 0,5 - 3 Gew.-%. Das wäßrige System kann gegebenenfalls bis zu 10 Gew.-% organische Cosolventien enthalten, was jedoch weniger bevorzugt ist. Das Gewichtsverhältnis der Trockensubstanzen der organopolysiloxanhaltigen Zusammensetzung (Komponente I) zur siliciumfreien Komponente II beträgt hierbei 0,05 : 1 bis 20 : 1, bevorzugt 0,05 : 1 bis 5 : 1 und besonders bevorzugt 0, 1 : 1 bis 2:1.

Darüber hinaus wird bevorzugt, daß die organopolysiloxanhaltige Zusammensetzung im gebrauchsfertigen Beschichtungsmittel als Trockensubstanz maximal zu 5 Gew.-%, besser maximal zu 3 Gew.-%, bevorzugt zu 0,03 bis 2 Gew.-%, besonders bevorzugt zu 0,05 bis 1 Gew.-% und ganz besonders bevorzugt zu 0,1 bis weniger als 1 Gew.-% enthalten ist. Hohe Mengen an Komponente I führen nicht nur zu keiner weiteren Verbesserung der erzielten Wirkung, sondern oftmals auch zu einer Verschlechterung. Eine mögliche Erklärung besteht darin, daß die Komponente I nur über die Wechselwirkung mit der Glasoberfläche und der Komponente II ihre Wirkung entfaltet. Darüber hinausgehende Mengen an der Komponente I führen nur zur Bildung von dreidimensional vernetztem Polysiloxan, was nicht nur überflüssig, sondern unter Umständen auch nachteilig ist. Beispielsweise kann der Effekt der Festigkeitssteigerung ausbleiben oder es ist zumindest ein Curing nötig; bei zu hoher Konzentration an Silan kann die Glasoberfläche zudem eine leichte Trübung aufweisen; außerdem ist die Etikettenhaftung verschlechtert. Für die übliche Praxis sind Konzentrationen von maximal 0,8 Gew.-% an Komponente I meist vollkommen ausreichend.

Unter der Trockensubstanz der wasserbasierenden, polysiloxanhaltigen Zusammensetzung wird definitionsgemäß der nach Lagerung einer definierten Menge (ca. 1 g) in einer Einwegschale für 1 h bei 125 °C im Trockenschrank verbleibende, feste Anteil verstanden. Zur gravimetrischen Analyse wird die Einwegschale nach Beendigung des Trockenvorganges 20 Minuten in einem Exsikkator auf Raumtemperatur abgekühlt und auf einer Analysenwaage auf 1 mg genau zurückgewogen.

Die wäßrige Zusammensetzung, die die Komponenten I und II enthält, kann wahlweise gleich in gebrauchsfertiger Konzentration hergestellt werden oder auch zunächst als Konzentrat, das dann vor der Verwendung mit Wasser verdünnt wird.

Eine Ausgestaltungsform dieser Erfindung besteht darin, daß auf die Schicht des Kaltendvergütungsmittels, das die Komponenten I und II enthält, eine weitere Schicht eines bekannten Kaltendvergütungsmittels aufgetragen wird, das eine oder mehrere der Komponenten II a) bis II d), ein Polyurethan, ein Polyacrylat, ein Epoxidharz oder deren Vorstufen enthält. Auf diese Weise können besonders hohe Festigkeitswerte sowie besonders hohe Waschlaugenbeständigkeit erhalten werden.

Besonders gute Ergebnisse werden erhalten, wenn auf die Schicht des Kaltendvergütungsmittels, das die Komponenten I und II enthält, eine weitere Schicht der gleichen Art aufgetragen wird. Man erhält damit einen gleichmäßigeren Schichtauftrag sowie niedrigere Standardabweichungen der Festigkeitswerte.

Die Schicht bzw. die Schichten des Kaltendvergütungsmittels werden auf die Oberflächen der Hohlglasbehälter in herkömmlicher Weise aufgebracht, wie Sprühen, Tauchen oder Aufrollen. Die Auftragung des Kaltendvergütungsmittels erfolgt im Temperaturbereich der Glasoberflächen von etwa 30 bis 150 °C, bevorzugt von etwa 70 bis 110 °C und besonders bevorzugt von 80 bis 100 °C. In diesem niedrigen Temperaturbereich wird die Erzeugung innerer Spannungen durch die mit dem Besprühen verbundene Abkühlung minimiert. Beim Auftrag von zwei oder mehr Schichten hintereinander sollte die vorher aufgetragene Schicht getrocknet sein, was bei der Verfahrenstemperatur in der Regel etwa eine bis mehrere Sekunden benötigt. Längere Wartezeiten sind unnötig.

Grundsätzlich ist es ein wesentlicher verfahrenstechnischer Vorteil, daß die aufgetragene Schicht, die die Komponenten I und II enthält, keinem Curingschritt unterworfen zu werden braucht, da dies in den Prozeßablauf eingreifen und hohe Investitionskosten verursachen würde. Darüber hinaus sind die behandelten Hohlglasbehälter sofort nach der Behandlung gegen mechanische Beschädigung geschützt, so daß sie unmittelbar weitertransportiert werden können, ohne durch Stoß oder Drängeldruck in Mitleidenschaft gezogen zu werden.

Die mit dem erfindungsgemäßen Verfahren erzielten Vorteile sind direkt mit der Morphologie der Schicht verknüpft, die vom Kaltendvergütungsmittel herrührt. Mit Hilfe analytischer Methoden läßt sich über die Schichtdicke hinweg ein Verteilungsprofil der verschiedenen Elemente (d. h. Si, C, O und ggf. N) bestimmen, das typisch für das Verfahren ist Die erfindungsgemäß erhaltenen Hohlglasbehälter unterscheiden sich somit in diesem Punkt strukturell von den Hohlglasbehältern des Standes der Technik.

Die Erfindung soll im folgenden anhand von Beispielen erläutert werden.

### Beispiel 1:

1,5 Gew.-Teile einer Polyethylendispersion der Handelsbezeichnung TECOL OG 25 der Fa Trüb Chemie, Ramsen, Schweiz (Feststoffgehalt 25 %; anionisches Emulgatorsystem) wird mit 98 Gew.-Teilen Wasser versetzt. Anschließend werden 0,5 Gew.-Teile 3-Aminopropyltriethoxysilan eingemischt, worauf man 6 Stunden bei Raumtemperatur stehen läßt. Die Mischung ist nun einsatzbereit.

### Beispiel 2:

Zu einer vorgelegten Mischung von 265,2 g 3-Aminopropyltriethoxysilan (1,2 mol), 88,8 g Propylmethyldimethoxysilan (0,6 mol) und 98,4 g Propyltrimethoxysilan (0,6 mol) werden innerhalb von 10 Minuten 86,4 g Wasser zudosiert. Dabei steigt die Temperatur von 25 °C auf 50 °C. Das Reaktionsgemisch wird 2 Stunden bei 60 °C gerührt; danach werden 136 g des entstandenen Hydrolysealkohols bei 250 mbar und 45 °C abdestilliert. Anschließend wird eine Mischung aus 274 g Wasser und 72,3 g 84 gew-%iger wäßriger Ameisensäure innerhalb von 15 Minuten zudosiert; hierbei steigt die Temperatur von 45 °C auf 55 °C. Dann wird innerhalb von ca. 4 Stunden ein Ethanol/Methanol/Wasser-Gemisch abdestilliert (200 - 133 mbar; 50 °C) und gleichzeitig durch Wasser ersetzt, so daß die Konzentration der Lösung konstant bleibt. Wenn die Kopftemperatur ca. 50 °C beträgt und das Kopfprodukt nur noch Wasser enthält, wird die Destillation beendet; das Produkt wird dann mit Wasser auf ein Gewicht von 2262 g eingestellt.

Zur Herstellung eines Kaltendvergütungsmittels werden 2,5 Gew.-Teile der erhaltenen Lösung, 1,5 Gew.-Teile einer Polyethylendispersion der Handelsbezeichnung TECOL OG 25 der Fa. Trüb Chemie, Ramsen, Schweiz und 96 Gew.-Teile Wasser gemischt. Die erhaltene Mischung kann unmittelbar eingesetzt werden.

Im folgenden wird das erfindungsgemäße Verfahren zur Oberflächenversiegelung von Hohlkörpern beispielhaft erläutert. Hierbei werden folgende Abkürzungen verwendet:
- HV=: Heißendvergütung gemäß dem Stand der Technik mit Titantetrachlorid
- KV=: Kaltendvergütung gemäß dem Stand der Technik mit einer Mischung aus 1,5 Gew.-Teilen TECOL OG 25 der Fa. Trüb Chemie, Ramsen. Schweiz und 98,5 Gew.-Teilen Wasser, sofern nicht anders angegeben.
- MKV=: Modifizierte Kaltendvergütung gemäß der Erfindung

Das Vergütungsmittel wird in allen Fällen über eine Sprühbrücke appliziert.

### Beispiel 3:

Dieses Beispiel erläutert die Behandlung einer 0,33 ltr Standard III-Bierflasche sowohl mit als auch ohne Heißendvergütung mit der silanmodifizierten Polyethylendispersion des Beispiels 1 bei 80 °C.

Für die Versuchsreihen werden jeweils die Innendruckfestigkeiten einer Formennummer am Kühlofenaustrag, am Packer, nach 1, 5 und 10 Minuten Liniensimulator (naß) ermittelt und mit den Innendruckfestigkeiten der standardvergüteten Flasche verglichen. Die Tabelle 1 zeigt die ermittelten Innendruckfestigkeiten mit dazugehorigen Standardabweichungen.

Zum Vergleich hierzu werden Flaschen mit Heißendvergütung mit einer silanmodifizierten Polyethylendispersion der gleichen Zusammensetzung wie der des Beispiels 1, jedoch ohne Reifezeit behandelt. Die Ergebnisse sind in der Tabelle 1 unter der Spalte HV/MKV0R aufgeführt.

Der Liniensimulator dient der Simulation des Festigkeitsverhaltens im Linientransport sowohl in der Hütte als auch während der Abfüllung. Hierbei werden Einwirkungen auf die Flasche während ihres Gebrauchs durch Reibung, Schlag, Druck und Feuchtigkeit simuliert. Eine Minute Liniensimulator entspricht in etwa dem Lebenszyklus einer Einwegflasche vom Herstellungsprozeß bis zum Endverbraucher. 10 Minuten Liniensimulator entsprechen etwa 10 bis 12 Umläufen bei Mehrwegflaschen.

**Tabelle 1**

| **Kühlofen** | **HV/KV** | **HV/MKV** | **HV/MKVoR** | **MKV** |
|---|---|---|---|---|
| Mittelwert [bar] | 34,78 | 33,86 | 34,16 | 36,48 |
| Standardabweichung [bar] | 6,08 | 4,88 | 5,02 | 4,75 |

| **Packer** | **HV/KV** | **HV/MKV** | **HV/MKVoR** | **MKV** |
|---|---|---|---|---|
| Mittelwert [bar] | 35,64 | 32,86 | 33,13 | 35,01 |
| Standardabweichung [bar] | 7,83 | 9,77 | 9,10 | 5,54 |

| **1 min Liniensimulator** | **HV/KV** | **HV/MKV** | **HV/MKVoR** | **MKV** |
|---|---|---|---|---|
| Mittelwert [bar] | 16,01 | 21,10 | 16,23 | 16,30 |
| Standardabweichung [bar] | 2,02 | 5,33 | 1,95 | 1,90 |

| **5 min Liniensimulator** | **HV/KV** | **HV/MKV** | **HV/MKVoR** | **MKV** |
|---|---|---|---|---|
| Mittelwert [bar] | 12,50 | 18,40 | 12,20 | 12,21 |
| Standardabweichung [bar] | 0,85 | 2,57 | 0,93 | 1,34 |

| **10 min Liniensimulator** | **HV/KV** | **HV/MKV** | **HV/MKVoR** | **MKV** |
|---|---|---|---|---|
| Mittelwert [bar] | 10,62 | 14,22 | 10,57 | 10,70 |
| Standardabweichung [bar] | 0,75 | 1,48 | 0,79 | 0,80 |
| HV: Heißendvergütung | | | | |
| KV: Kaltendvergütung | | | | |
| MKV: Modifizierte Kaltendvergutung | | | | |
| MKVoR: Modifizierte Kaltendvergutung ohne Reifezeit | | | | |

Die Ergebnisse hier als auch bei den nachfolgenden Beispielen zeigen, daß beim erfindungsgemäßen Verfahren zur Oberflächenversiegelung (MKV) auf eine Heißendvergütung verzichtet werden kann; die resultierende Innendruckfestigkeit liegt dann auf dem gleichen Niveau wie bei der aus dem Stand der Technik bekannten und üblichen Kombination aus Heißendvergutung und Kaltendvergütung (HV/KV). Der Wegfall der Heißendvergütung bringt Vorteile im Hinblick auf Kosten, Ökologie und Produktionsfreiraum. Bei hohen Anforderungen an die Innendruckfestigkeit auch bei längerem Gebrauch ist jedoch die Kombination aus Heißendvergütung und erfindungsgemäßer Oberflächenversiegelung (HV/MKV) dem Stand der Technik dort weit überlegen.

### Beispiel 4:

Dieses Beispiel erläutert die Behandlung von 0,5 ltr NRW-Bierflaschen sowohl mit als auch ohne Heißendvergütung mit der silanmodifizierten Polyethylendispersion des Beispiels 1 bei 85 °C. Es wird genau wie im Beispiel 3 vorgegangen. Die Tabelle 2 zeigt die ermittelten Innendruckfestigkeiten mit den dazugehörigen Standardabweichungen.
Zum Vergleich hierzu werden Flaschen ohne Heißendvergütung mit einer silanmodifizierten Polyethylendispersion der gleichen Zusammensetzung wie der des Beispiels 1, jedoch ohne Reifezeit behandelt. Die Ergebnisse sind in der Tabelle 2 unter der Spalte MKVoR aufgeführt.

**Tabelle 2**

| **Kühlofen** | **HV/KV** | **HV/MKV** | **MKV** | **MKVoR** |
|---|---|---|---|---|
| Mittelwert [bar] | 44,61 | 45,25 | 45,53 | 44,16 |
| Standardabweichung [bar] | 7,77 | 6,95 | 7,19 | 7,21 |

| **Packer** | **HV/KV** | **HV/MKV** | **MKV** | **MKVoR** |
|---|---|---|---|---|
| Mittelwert [bar] | 39,17 | 45,16 | 40,70 | 39,78 |
| Standardabweichung [bar] | 7,08 | 8,03 | 6,88 | 7,01 |

| **1 min Liniensimulator** | **HV/KV** | **HV/MKV** | **MKV** | **MKVoR** |
|---|---|---|---|---|
| Mittelwert [bar] | 22,84 | 36,87 | 35,58 | 23,84 |
| Standardabweichung [bar] | 1,94 | 8,15 | 8,96 | 2,11 |

| **5 min Liniensimulator** | **HV/KV** | **HV/MKV** | **MKV** | **MKVoR** |
|---|---|---|---|---|
| Mittelwert [bar] | 20,39 | 29,60 | 26,36 | 19,27 |
| Standardabweichung [bar] | 2,89 | 4,75 | 2,42 | 2,61 |

| **10 min Liniensimulator** | **HV/KV** | **HV/MKV** | **MKV** | **MKVoR** |
|---|---|---|---|---|
| Mittelwert [bar] | 18,86 | 29,30 | 24,37 | 17,86 |
| Standardabweichung [bar] | 1,38 | 4,22 | 2,81 | 1,13 |
| HV: Heißendvergütung | | | | |
| KV: Kaltendvergütung | | | | |
| MKV: Modifizierte Kaltendvergütung | | | | |
| MKVoR: Modifizierte Kaltendvergütung ohne Reifezeit | | | | |

### Beispiel 5:

Dieses Beispiel erläutert die Behandlung einer 0,7 ltr Sektflasche sowohl mit als auch ohne Heißendvergütung mit einer silanmodifizierten Polyethylendispersion, die entsprechend Beispiel 1 hergestellt wurde und die 2 Gew.-% Polyethylendispersion und 0,5 Gew-% 3-Aminopropyltriethoxysilan enthält, bei 91 °C. Es wird ansonsten genau wie im Beispiel 3 vorgegangen. Die Tabelle 3 zeigt die ermittelten Innendruckfestigkeiten mit den dazugehörigen Standardabweichungen.

**Tabelle 3**

| **Kühlofen** | **HV/KV** | **HV/MKV** | **MKV** |
|---|---|---|---|
| Mittelwert [bar] | 41,34 | 41,97 | 41,24 |
| Standardabweichung [bar] | 2,95 | 0,16 | 2,09 |

| **Packer** | **HV/KV** | **HV/MKV** | **MKV** |
|---|---|---|---|
| Mittelwert [bar] | 40,16 | 41,23 | 39,32 |
| Standardabweichung [bar] | 5,15 | 2,89 | 5,72 |

| **1 min Liniensimulator** | **HV/KV** | **HV/MKV** | **MKV** |
|---|---|---|---|
| Mittelwert [bar] | 33,72 | 39,08 | 30,37 |
| Standardabweichung [bar] | 6,30 | 3,82 | 5,73 |

| **5 min Liniensimulator** | **HV/KV** | **HV/MKV** | **MKV** |
|---|---|---|---|
| Mittelwert [bar] | 26,67 | 38,33 | 21,05 |
| Standardabweichung [bar] | 3,44 | 4,78 | 2,35 |

| **10 min Liniensimulator** | **HV/KV** | **HV/MKV** | **MKV** |
|---|---|---|---|
| Mittelwert [bar] | 20,06 | 31,36 | 19,63 |
| Standardabweichung [bar] | 3,25 | 4,48 | 1,80 |
| HV: Heißendvergütung | | | |
| KV: Kaltendvergutung; 2 Gew.-% | | | |
| MKV: Modifizierte Kaltendvergütung | | | |

### Beispiel 6:

Dieses Beispiel erläutert die Behandlung einer heißendvergüteten 1 ltr Softdrinkflasche mit der gleichen silanmodifizierten Polyethylendispersion, die auch im Beispiel 5 verwendet wird, bei 80 °C. Es wird ansonsten genau wie im Beispiel 3 vorgegangen und mit den Innendruckfestigkeiten von standardvergüteten Flaschen mit unterschiedlichen, handelsüblichen Kaltendvergütungsmitteln verglichen. Die Tabelle 4 zeigt die ermittelten Innendruckfestigkeiten mit den dazugehörigen Standardabweichungen.

**Tabelle 4**

| **Kühlofen** | **HV/KV1** | **HV/KV2** | **HV/MKV** |
|---|---|---|---|
| Mittelwert [bar] | 21,21 | 24,17 | 20,74 |
| Standardabweichung [bar] | 6,36 | 5,52 | 5,36 |

| **Packer** | **HV/KV1** | **HV/KV2** | **HV/MKV** |
|---|---|---|---|
| Mittelwert [bar] | 20,09 | 20,14 | 20,62 |
| Standardabweichung [bar] | 4,27 | 5,61 | 4,81 |

| **1 min Liniensimulator** | **HV/KV1** | **HV/KV2** | **HV/MKV** |
|---|---|---|---|
| Mittelwert [bar] | 17,84 | 17,73 | 18,82 |
| Standardabweichung [bar] | 3,76 | 4,11 | 3,41 |

| **5 min Liniensimulator** | **HV/KV1** | **HV/KV2** | **HV/MKV** |
|---|---|---|---|
| Mittelwert [bar] | 12,47 | 11,44 | 16,08 |
| Standardabweichung [bar] | 1,64 | 1,05 | 2,06 |

| **10 min Liniensimulator** | **HV/KV1** | **HV/KV2** | **HV/MKV** |
|---|---|---|---|
| Mittelwert [bar] | 11,02 | 10,24 | 15,09 |
| Standardabweichung [bar] | 1,24 | 0,69 | 1,72 |
| HV: Heißendvergütung | | | |
| KV1: TEGOGLAS® RP 40 (Goldschmidt AG); 2 Gew.-% | | | |
| KV2: TEGOGLAS® RP 40 C (Goldschmidt AG); 2 Gew.-% | | | |
| MKV: Modifizierte Kaltendvergütung | | | |

### Beispiel 7:

Wie im Beispiel 4 werden 0,5 ltr NRW-Bierflaschen sowohl mit als auch ohne Heißendvergütung mit der silanmodifizierten Polyethylendispersion des Beispiels 1 behandelt. Für die Versuchsreihen werden jeweils die Naß- und Trockendurchkratzeigenschaften einer Formennummer am Kühlofenaustrag ermittelt und mit den entsprechenden Werten der standardvergüteten Flasche verglichen. Die ermittelten Kratzfestigkeitswerte sind in der Tabelle 5 wiedergegeben.

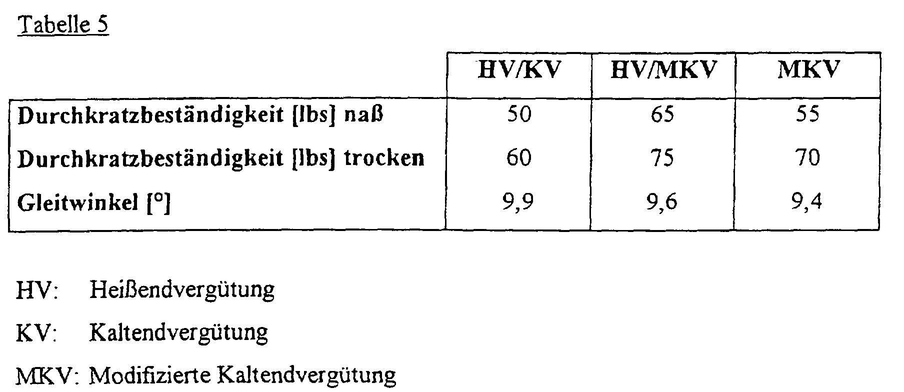

### Beispiel 8 a:

1,5 Gew.-Teile einer Esterwachsdispersion der Handelsbezeichnung TEGOGLAS® R 200 (Goldschmidt AG; 21,5 Gew.-% Feststoffanteil) wird mit 98 Gew.-Teilen Wasser versetzt. Anschließend werden 0,5 Gew.-Teile 3-Aminopropyltriethoxysilan eingemischt, worauf man 6 Stunden bei Raumtemperatur stehen läßt. Die Mischung ist nun einsatzbereit.

### Beispiel 8 b:

0,5 ltr NRW-Bierflaschen ohne Heißendvergütung werden zum Teil mit dem Kaltendbeschichtungsmittel aus Beispiel 1 und zum Teil mit dem Kaltendbeschichtungsmittel aus Beispiel 8 a behandelt, wobei wie im Beispiel 4 vorgegangen wird. Anschließend wird die Etikettierung hinsichtlich Haftung und Ablösung für Kasein- und Dextrinleime untersucht. Die Tabelle 6 stellt die Ergebnisse dar und zeigt, daß die silanmodifizierten Kaltendbeschichtungsmittel keinen negativen Einfluß auf die Etikettierbarkeit haben.

**Tabelle 6:**

| **Haftung** | **Polyethylen/Silan** | **Esterwachs/Silan** |
|---|---|---|
| **trocken** | Faserriß ^{a)} Haftung gut | Faserriß ^{a)} Haftung gut |
| **naß (H**_{**2**}**O, 20 °C)** | > 60 Minuten Haftung gut ^{b)} | > 60 Minuten Haftung gut ^{b)} |
| **naß (2 % NaOH, 80 °C)** | bis 2 Minuten Haftung gut ^{c)} | bis 5 Minuten Haftung gut ^{c)} |

| | | |
|---|---|---|
| a) beim Versuch des Abziehens | | |
| b) bis zum Ende der Meßzeit (60 Minuten) keine Ablöseerscheinungen | | |
| c) danach löst sich das Etikett und schwimmt auf | | |

Die gleichen Ergebnisse werden auch mit zusätzlich heißendvergüteten Flaschen gleicher Sorte sowie mit 1 ltr Softdrink-Flaschen und 0,33 ltr Standard III-Bierflaschen (jeweils mit und ohne Heißendvergütung) erhalten.

### Beispiel 9:

Dieses Beispiel erläutert die Behandlung einer heißendvergüteten 0,33 ltr Einweg-Bierflasche mit der silanmodifizierten Polyethylendispersion des Beispiels 2 bei 80 °C. Es wird genau wie im Beispiel 3 vorgegangen. Die Tabelle 7 zeigt die ermittelten Innendruckfestigkeiten mit dazugehörigen Standardabweichungen.

**Tabelle 7:**

| **Kühlofen** | **HV/KV** | **HV/MKV** |
|---|---|---|
| Mittelwert [bar] | 42,73 | 39,66 |
| Standardabweichung [bar] | 7,82 | 4,51 |

| **Packer** | **HV/KV** | **HV/MKV** |
|---|---|---|
| Mittelwert [bar] | 39,62 | 38,67 |
| Standardabweichung [bar] | 5,67 | 6,96 |

| **1 min Liniensimulator** | **HV/KV** | **HV/MKV** |
|---|---|---|
| Mittelwert [bar] | 19,65 | 28,84 |
| Standardabweichung [bar] | 2,80 | 4,95 |

| **5 min Liniensimulator** | **HV/KV** | **HV/MKV** |
|---|---|---|
| Mittelwert [bar] | 14,58 | 22,13 |
| Standardabweichung [bar] | 1,65 | 2,37 |
| HV: Heißendvergütung | | |
| KV: Kaltendvergütung | | |
| MKV: Modifizierte Kaltendvergütung | | |

### Beispiel 10:

1580 g Wasser (87,8 mol) werden in einem beheizbaren Rührreaktor (Innenthermometer, Dosiervorrichtung über Tauchrohr, Destilliervorrichtung, Anschluß an Vakuumpumpe) vorgelegt und langsam 540 g 3-Aminopropyltriethoxysilan (2,4 mol) zudosiert, so daß die Temperatur 50 °C nicht überschreitet. Diese Reaktion ist schwach exotherm. Danach thermostatisiert man auf 50 °C und rührt noch weitere 6 Stunden. Nach dieser Zeit ist das Silan vollständig zum entsprechenden Silanol hydrolysiert und in der gebildeten EtOH/H₂O-Mischung gelöst. Danach wird der Hydrolysealkohol bei einem Druck von 100 - 70 mbar und einer Sumpftemperatur von max. 50 °C abdestilliert.
Wenn die Kopftemperatur ca. 48 °C beträgt und das Kopfprodukt nur noch H₂O enthält, wird die Destillation beendet und das Produkt durch Zugabe von H₂O auf ein Gewicht von 1980 g eingestellt.

Zur Herstellung eines Kaltendvergütungsmittels werden 1,25 Gew.-Teile der erhaltenen Lösung, 1,5 Gew.-Teile einer Polyethylendispersion der Handelsbezeichnung TECOL OG 25 der Fa. Trüb Chemie, Ramsen, Schweiz und 97,25 Gew.-Teile Wasser gemischt. Die erhaltene Mischung kann unmittelbar eingesetzt werden.
Wie im Beispiel 4 werden heißendvergütete 0,5 ltr NRW-Bierflaschen mit dieser Mischung behandelt. Die Tabelle 8 zeigt die ermittelten Innendruckfestigkeiten mit den dazugehörigen Standardabweichungen.

**Tabelle 8**

| **Kühlofen** | **HV/KV** | **HV/MKV** |
|---|---|---|
| Mittelwert [bar] | 47,55 | 51,39 |
| Standardabweichung [bar] | 10,14 | 8,60 |

| **1 min Liniensimulator** | **HV/KV** | **HV/MKV** |
|---|---|---|
| Mittelwert [bar] | 25,10 | 27,67 |
| Standardabweichung [bar] | 2,92 | 2,74 |

| **5 min Liniensimulator** | **HV/KV** | **HV/MKV** |
|---|---|---|
| Mittelwert [bar] | 21,66 | 25,22 |
| Standardabweichung [bar] | 2,25 | 2,42 |
| HV: Heißendvergütung | | |
| KV: Kaltendvergütung | | |
| MKV: Modifizierte Kaltendvergütung | | |

### Beispiel 11:

304,3 g 3-Aminopropyltriethoxysilan (1,376 mol) werden zusammen mit 101,1 g Methyltriethoxysilan (0,568 mol) in einem heizbaren Rührreaktor (Innenthermometer, Dosiervorrichtung über Tauchrohr, Destilliervorrichtung, Anschluß an Vakuumpumpe) vorgelegt. Anschließend werden 608,5 g H₂O (33,8 mol), davon die ersten 50 g sehr langsam (exotherme Hydrolyse), eindosiert, so daß eine Temperatur von 50 - 55 °C erreicht wird. Zum Ende der Hydrolysereaktion sinkt die Temperatur; durch Einstellen der Heizung ist möglichst rasch wieder auf 55 °C zu thermostatisieren. Es wird noch 2 Stunden gerührt und danach das entstandene EtOH bei einem Vakuum von 135 mbar abdestilliert. Dabei darf eine Sumpftemperatur von 75 °C nicht überschritten werden. Nach Abnahme von ca. 50 g Destillat ergänzt man mit 50 g H₂O. Bei 100 g Abnahme wird eine Destillatsprobe genommen und GC-analytisch untersucht. Aus der GC-Verteilung von H₂O und EtOH sowie aus dem abgenommenen Volumen wird die zu ergänzende Menge an H₂O bestimmt. Nach jeder weiteren Abnahme von 100 g Destillat wird eine Probenanalyse vorgenommen, das fehlende Volumen mit H₂O ergänzt und die abdestillierte Menge an EtOH bestimmt. Das Ende der Destillation bei 75 °C Sumpftemperatur ist zugleich das Ende der Reaktion [Abnahmemengen: ca. 265 g EtOH (5,8 mol) sowie ca. 95 g H₂O (5,3 mol); zur Ergänzung benötigtes H₂O: ca. 350 g (19,4 mol)]. Der verbliebene Sumpf wird durch weitere Zugabe von H₂O auf die ursprünglich vor der Destillation vorhandene Masse eingestellt.

Aus dieser Lösung werden zusammen mit Polyethylen anspruchsgemäße Kaltendvergütungsmittel hergestellt. Bei der Beschichtung von Flaschen werden damit die gleichen vorteilhaften Wirkungen wie in den vorherigen Beispielen erzielt.

### Beispiel 12:

708 g 3-Glycidyloxypropyltrimethoxysilan (3,0 mol) werden in einem beheizbaren Rührreaktor (Innenthermometer, Dosiervorrichtung über Tauchrohr, Destilliervorrichtung, Anschluß an Vakuumpumpe) vorgelegt. 162 g H₂O (9,0 mol; 3,0 mol/mol 3-Glycidyloxypropyltrimethoxysilan) und 3,5 g HCOOH (85%ig) werden gemischt und innerhalb von 20 min zugegeben. Dabei steigt die Temperatur von 20 °C auf 35 °C an. Das Reaktionsgemisch wird 2 Stunden bei 60 °C gerührt. Danach wird der Hydrolysealkohol bei einem Druck von 300 - 133 mbar und einer Sumpftemperatur von 40 - 50 °C abdestilliert und durch H₂O [(ca. 500 g (27,8 mol)] ersetzt.
Wenn die Kopftemperatur ca. 50 °C beträgt und das Kopfprodukt nur noch H₂O enthält, wird die Destillation beendet und das Produkt mit H₂O [ca. 825 g (45,8 mol)] auf ein Gewicht von 1770 g eingestellt.
Aus dieser Lösung werden zusammen mit Polyethylen anspruchsgemäße Kaltendvergütungsmittel hergestellt. Bei der Beschichtung von Flaschen werden damit die gleichen vorteilhaften Wirkungen wie in den vorherigen Beispielen erzielt.

## Patentansprüche

1. Verfahren zur Herstellung oberflächenversiegelter Hohlglasbehälter, wobei im Herstellungsprozeß im Bereich des Austritts des Kühlofens, der einer Maschine zur Herstellung von Hohlglasbehältern nachgeordnet ist, eine Beschichtung der Hohlglasbehälter mittels eines wasserbasierenden Kaltendvergütungsmittels erfolgt,
dadurch gekennzeichnet,
daß das Kaltendvergütungsmittel im wesentlichen folgende Komponenten enthält:
I. Eine wasserbasierende organopolysiloxanhaltige Zusammensetzung, hergestellt aus
a) Q Molen eine funktionelle Gruppe tragender Alkoxysilane der allgemeinen Formel
A-Si(R¹)_{y}(OR*)_{3-y} I
und
b) M Molen Alkoxysilane, ausgewählt aus
α) Trialkoxysilanen der allgemeinen Formel
R²-Si(OR**)₃ II
und/oder
β) Dialkoxysilanen der allgemeinen Formel
R³R⁴Si(OR***)₂ III
und/oder
γ) Tetraalkoxysilanen der allgemeinen Formel
Si(OR****)₄, IV
wobei A einen Substituenten bedeutet, der mindestens eine direkt oder über einen aliphatischen oder aromatischen Kohlenwasserstoffrest mit Silicium verbundene Amino-, Alkylamino-, Dialkylamino-, Amido-, Epoxy-, Acryloxy-, Methacryloxy-, Cyano-, Isocyanato-, Ureido-, Thiocyanato-, Mercapto-, Sulfan- oder Halogengruppe besitzt,
R¹ = Methyl, Ethyl oder A (wie vorstehend definiert),
y = 0 oder 1,
R*, R**, R*** und R**** sind unabhängig voneinander eine Alkylgruppe mit 1 bis 8 C-Atomen oder eine entsprechende Alkylgruppe, die mit einem Alkyl[(poly)ethylenglykol]-Rest substituiert ist,
R², R³ und R⁴ sind unabhängig voneinander eine Alkyl-, Alkenyl-, Alkinyl-, Cycloalkyl-, Cycloalkenyl- oder aromatische Gruppe mit jeweils maximal 18 C-Atomen oder eine derartige Gruppe, die teil- oder perfluoriert und/oder mit Alkyloxy- und/oder mit Aryloxygruppen substituiert ist,
im molaren Verhältnis 0 ≤ M/Q ≤ 20,
wobei im Gemisch der Silane I bis IV durchschnittlich mindestens 2,4 Alkoxygruppen OR*, OR**, OR*** bzw. OR**** pro Siliciumatom enthalten sind,
II. Eine siliciumfreie Komponente, ausgewählt aus
a) einem Wachs und/oder
b) einem partiellen Fettsäureester und/oder
c) einer Fettsäure ;
wobei zusätzlich ein Tensid enthalten sein kann,
weiterhin gekennzeichnet dadurch,
daß das wasserbasierende Kaltendvergütungsmittel einen Trockensubstanzanteil von 0,1 bis 10 Gew.-% besitzt, wobei, bezogen auf Trockensubstanzen, das Gewichtsverhältnis der organopolysiloxanhaltigen Zusammensetzung (Komponente I) zur siliciumfreien Komponente II 0,05 : 1 bis 20 : 1 beträgt und daß die Temperatur der Glasoberfläche beim Auftragen des Kaltendvergütungsmittel mindestens 30°C beträgt.

2. Verfahren gemäß Anspruch 1,
dadurch gekennzeichnet,
daß die wasserbasierende organopolysiloxanhaltige Zusammensetzung hergestellt wird durch Mischen der Silanzusammensetzung gemäß den allgemeinen Formeln I bis IV mit Wasser und Stehenlassen bei Raumtemperatur über mindestens 3 Stunden.

3. Verfahren gemäß Anspruch 1,
dadurch gekennzeichnet,
daß die wasserbasierende organopolysiloxanhaltige Zusammensetzung hergestellt wird durch Versetzen der Silanzusammensetzung gemäß den allgemeinen Formeln I bis IV mit 0,5 bis 30 Molen Wasser pro Mol der eingesetzten Alkoxysilane und Entfernen des bei der Umsetzung entstandenen Alkohols durch Destillation.

4. Verfahren gemäß einem der vorhergehenden Ansprüche,
dadurch gekennzeichnet,
daß die Alkoxysilane der Formeln II bis IV und die funktionellen Alkoxysilane der Formel I miteinander im Verhältnis 0 ≤ M/Q ≤ 12 stehen.

5. Verfahren gemäß einem der vorhergehenden Ansprüche,
dadurch gekennzeichnet,
daß die Alkoxysilane der Formeln II bis IV und die funktionellen Alkoxysilane der Formel I miteinander im Verhältnis 0,02 ≤ M/Q ≤ 7 stehen.

6. Verfahren gemäß einem der vorhergehenden Ansprüche,
dadurch gekennzeichnet,
daß die Alkoxysilane der Formeln II bis IV und die funktionellen Alkoxysilane der Formel I miteinander im Verhältnis 0,1 ≤ M/Q ≤ 4 stehen.

7. Verfahren gemäß einem der vorhergehenden Ansprüche,
dadurch gekennzeichnet,
daß die Oberflächen der frisch hergestellten Hohlglasbehälter mit einer Heißendvergütung versehen sind.

8. Verfahren gemäß einem der vorhergehenden Ansprüche,
dadurch gekennzeichnet,
daß das Wachs als wäßrige Dispersion eingesetzt wird.

9. Verfahren gemäß einem der vorhergehenden Ansprüche,
dadurch gekennzeichnet,
daß das verwendete Beschichtungsmittel bis zu 10 Gew.-% organische Cosolventien enthält.

10. Verfahren gemäß einem der vorhergehenden Ansprüche,
dadurch gekennzeichnet,
daß das verwendete Beschichtungsmittel ein wäßriges System mit einem Trockensubstanzanteil von 0,1 bis 8 Gew.-% ist.

11. Verfahren gemäß Anspruch 10,
dadurch gekennzeichnet,
daß der Trockensubstanzanteil 0,2 bis 5 Gew.-% beträgt.

12. Verfahren gemäß Anspruch 10,
dadurch gekennzeichnet,
daß der Trockensubstanzanteil 0,5 bis 3 Gew.-% beträgt.

13. Verfahren gemäß einem der vorhergehenden Ansprüche,
dadurch gekennzeichnet,
daß, bezogen auf Trockensubstanzen, das Gewichtsverhältnis der organopolysiloxanhaltigen Zusammensetzung I zur siliciumfreien Komponente II 0,05 : 1 bis 5 : 1 beträgt.

14. Verfahren gemäß Anspruch 13,
dadurch gekennzeichnet,
daß das Gewichtsverhältnis 0,1 : 1 bis 2 : 1 beträgt.

15. Verfahren gemäß einem der vorhergehenden Ansprüche,
dadurch gekennzeichnet,
daß die organopolysiloxanhaltige Zusammensetzung im Beschichtungsmittel zu maximal 5 Gew.-% enthalten ist.

16. Verfahren gemäß einem der vorhergehenden Ansprüche,
dadurch gekennzeichnet,
daß die organopolysiloxanhaltige Zusammensetzung im Beschichtungsmittel zu 0,03 bis 2 Gew.-% enthalten ist.

17. Verfahren gemäß einem der vorhergehenden Ansprüche,
dadurch gekennzeichnet,
daß die organopolysiloxanhaltige Zusammensetzung im Beschichtungsmittel zu 0,05 bis 1 Gew.-% enthalten ist.

18. Verfahren gemäß einem der vorhergehenden Ansprüche,
dadurch gekennzeichnet,
daß die organopolysiloxanhaltige Zusammensetzung im Beschichtungsmittel zu 0,1 bis weniger als 1 Gew.-% enthalten ist.

19. Verfahren gemäß einem der vorhergehenden Ansprüche,
dadurch gekennzeichnet,
daß zusätzlich eine weitere Schicht eines bekannten Kaltendvergütungsmittels aufgetragen wird.

20. Verfahren gemäß einem der Ansprüche 1 bis 18,
dadurch gekennzeichnet,
daß zusätzlich eine weitere Schicht der gleichen Art aufgetragen wird.

21. Verfahren gemäß einem der vorhergehenden Ansprüche,
dadurch gekennzeichnet,
daß die Temperatur der Glasoberfläche beim Auftragen des Kaltendvergütungsmittels im Bereich von 30 bis 150 °C liegt.

22. Verfahren gemäß Anspruch 21,
dadurch gekennzeichnet,
daß die Temperatur der Glasoberfläche im Bereich von 70 bis 110 °C liegt.

23. Hohlglasbehälter, hergestellt gemäß einem der vorhergehenden Ansprüche.

## Claims

1. A process for producing surface-sealed hollow glass containers, where as part of the production process the hollow glass containers are coated with a water-based cold end coating composition in the region of the exit from the cooling lehr, which is arranged following a machine for producing hollow glass containers, characterized in that the cold end coating composition substantially comprises the following components:
I. a water-based organopolysiloxane-containing composition prepared from
a) Q moles of functional group-bearing alkoxysilanes of the general formula
A-Si(R¹)_{y}(OR*)_{3-y} I
and
b) M moles of alkoxysilanes selected from
α) trialkoxysilanes of the general formula
R²-Si(OR**)₃ II
and/or
β) dialkoxysilanes of the general formula
R³R⁴Si(OR***)₂ III
and/or
γ) tetraalkoxysilanes of the general formula
Si(OR****)₄ IV,
where A is a substituent possessing at least one amino, alkylamino, dialkylamino, amido, epoxy, acryloxy, methacryloxy, cyano, isocyanato, ureido, thiocyanato, mercapto, sulphane or halogen group which is attached directly or via an aliphatic or aromatic hydrocarbon radical to silicon,
R¹ = methyl, ethyl or A (as defined above),
y = 0 or 1,
R*, R**, R*** and R**** independently of one another are an alkyl group having 1 to 8 carbon atoms or a corresponding alkyl group that is substituted by an alkyl[(poly)ethylene glycol] radical,
R², R³ and R⁴ independently of one another are an alkyl, alkenyl, alkynyl, cycloalkyl, cycloalkenyl or aromatic group having in each case not more than 18 carbon atoms, or a group of this kind which is partially fluorinated, perfluorinated and/or substituted by alkyloxy and/or by aryloxy groups,
in a molar ratio 0 ≤ M/Q ≤ 20, in that in the mixture of the silanes I to IV there being on average per silicon atom at least 2.4 alkoxy groups OR^{*}, OR^{**}, OR^{***} and/or OR^{****} and
II. a silicon-free component selected from
a) a wax and/or
b) a partial fatty acid ester and/or
c) a fatty acid;
a surfactant also possibly being present.
and additionally characterized in that the water-based cold end coating composition has a dry-matter content of from 0.1 to 10% by weight and, based on dry matter, the weight ratio of the organopolysiloxane-containing composition (component I) to the silicon-free component II is from 0.05:1 to 20:1, and in that the temperature of the glass surface when the cold end coating composition is applied is at least 30°C.

2. A process according to claim 1, characterized in that the water-based organopolysiloxane-containing composition is prepared by mixing the silane composition in accordance with the general formulae I to IV with water and leaving the mixture to stand at room temperature for at least 3 hours.

3. A process according to claim 1, characterized in that the water-based organopolysiloxane-containing composition is prepared by adding from 0.5 to 30 mol of water per mole of the alkoxysilanes employed to the silane composition in accordance with the general formulae I to IV and removing by distillation the alcohol that is formed in the course of the reaction.

4. A process according to any one of the preceding claims, characterized in that the ratio of the alkoxysilanes of the formulae II to IV to the functional alkoxysilanes of the formula I is 0 ≤ M/Q ≤ 12.

5. A process according to any one of the preceding claims, characterized in that the ratio of the alkoxysilanes of the formulae II to IV to the functional alkoxysilanes of the formula I is 0.02 ≤ M/Q ≤ 7.

6. A process according to any one of the preceding claims, characterized in that the ratio of the alkoxysilanes of the formulae II to IV to the functional alkoxysilanes of the formula I is 0.1 ≤ M/Q ≤ 4.

7. A process according to any one of the preceding claims, characterized in that the surfaces of the freshly produced hollow glass containers have been provided with a hot end coating.

8. A process according to any one of the preceding claims, characterized in that the wax is employed in the form of an aqueous dispersion.

9. A process according to any one of the preceding claims, characterized in that the coating composition used contains up to 10% by weight of organic cosolvents.

10. A process according to any one of the preceding claims, characterized in that the coating composition used is an aqueous system having a dry-matter content of from 0.1 to 8% by weight.

11. A process according to claim 10, characterized in that the dry-matter content is from 0.2 to 5% by weight.

12. A process according to claim 10, characterized in that the dry-matter content is from 0.5 to 3% by weight.

13. A process according to any one of the preceding claims, characterized in that, based on dry matter, the weight ratio of the organopolysiloxane-containing composition I to the silicon-free component II is from 0.05:1 to 5:1.

14. A process according to claim 13, characterized in that the weight ratio is from 0.1:1 to 2:1.

15. A process according to any one of the preceding claims, characterized in that the content of the organopolysiloxane-containing composition in the coating composition is not more than 5% by weight.

16. A process according to any one of the preceding claims, characterized in that the content of the organopolysiloxane-containing composition in the coating composition is from 0.03 to 2% by weight.

17. A process according to any one of the preceding claims, characterized in that the content of the organopolysiloxane-containing composition in the coating composition is from 0.05 to 1% by weight.

18. A process according to any one of the preceding claims, characterized in that the content of the organopolysiloxane-containing composition in the coating composition is from 0.1 to less than 1% by weight.

19. A process according to any one of the preceding claims, characterized in that a further coat of a known cold end coating composition is additionally applied.

20. A process according to any one of claims 1 to 18, characterized in that a further coat of the same type is additionally applied.

21. A process according to any one of the preceding claims, characterized in that the temperature of the glass surface when the cold end coating composition is applied is in the range from 30 to 150°C.

22. A process according to claim 21, characterized in that the temperature of the glass surface is in the range from 70 to 110°C.

23. A hollow glass container produced according to any one of the preceding claims.

## Revendications

1. Procédé de traitement de récipients en verre creux renforcés en surface, dans lequel dans le processus de production dans la zone de sortie de l'arche de refroidissement en aval d'une machine de production de récipients en verre creux, un revêtement du récipient en verre creux s'effectue à l'aide d'un agent de traitement à froid à base d'eau,
caractérisé en ce que
l'agent de traitement à froid contient essentiellement les composants suivants :
I. une composition à base d'eau contenant des organopolysiloxanes, préparée à partir de :
a) Q moles d'un alkoxysilane portant un groupe fonctionnel et de formule générale
A-Si (R¹)_{y}(OR*)_{3-y} I
et
b) M moles d'alkoxysilanes sélectionnés parmi
α) des trialkoxysilanes de formule générale :
R²-Si(OR**)₃ II
et/ou
β) des dialkoxysilanes de formule générale :
R³R⁴Si(OR***)₂ III
et/ou
γ) des tétraalkoxysilanes de formule générale :
Si(OR****)₄, IV
dans lesquelles A signifie un substituant qui possède au moins un groupe amino, alkylamino, dialkylamino, amido, epoxy, acryloxy, méthacryloxy, cyano, isocyanato, uréido, thiocyanato, mercapto, sulfane, ou halogène lié directement ou par l'intermédiaire d'un reste hydrocarboné aliphatique ou aromatique au silicium,
R¹ = méthyle, éthyle ou A (défini comme précédemment),
y = O ou 1,
R^{*}, R^{**}, R^{***} et R^{****} sont indépendamment l'un de l'autre, un groupe alkyle ayant de 1 à 8 atomes de carbone ou un groupe alkyle correspondant qui est substitué par un reste alkyl[(poly)éthylèneglycol],
R², R³ et R⁴ sont indépendamment l'un de l'autre un groupe alkyle, alkényle, alkinyle, cycloalkyle, cycloalkényle ou aromatique ayant respectivement au maximum 18 atomes de carbone ou un groupe de cette sorte qui est partiellement ou perfluoré et/ou substitué par des groupes alkyloxy et/ou aryloxy,
dans un rapport molaire O ≤ M/Q ≤ 20, dans lequel dans le mélange des silanes I à IV en moyenne au moins 2,4 groupes alkoxy OR*, OR**, OR*** ou OR**** par atome de silicium sont contenus,
II. un composant dépourvu de silicium choisi parmi :
a) une cire et/ou
b) un ester d'acide gras partiel et/ou
c) un acide gras,
dans lequel en supplément un agent tensioactif peut être contenu,
caractérisé en outre en ce que
l'agent de traitement à froid à base d'eau possède une proportion de substance sèche allant de 0,1 à 10 % en poids, pour lequel rapporté aux substances sèches le rapport en poids de la composition contenant des organopolysiloxanes (composant I) par rapport au composant dépourvu de silicium II est de 0,05 : 1 à 20 : 1, et la température de la surface du verre lors de l'application de l'agent de traitement à froid s'élève à au moins 30°C.

2. Procédé selon la revendication 1,
caractérisé en ce que
la composition à base d'eau contenant des organopolysiloxanes, est produite par mélange de la composition de silane conformément aux formules générales I à IV, avec de l'eau, et par un temps de repos à température ambiante pendant au moins 3 heures.

3. Procédé selon la revendication 1,
caractérisé en ce que
la composition à base d'eau contenant des organopolysiloxanes, est produite par addition de la composition de silane conformément aux.formules générales I à IV de 0,5 à 30 moles d'eau par mole des aloxysilanes utilisés, et élimination par distillation de l'alcool formé au cours de la réaction.

4. Procédé selon l'une quelconque des revendications précédentes,
caractérisé en ce que
les alkoxysilanes de formule II à IV et les alkoxysilanes fonctionnels de formule I sont présents les uns avec les autres dans le rapport O ≤ M/Q < 12.

5. Procédé selon l'une quelconque des revendications précédentes,
caractérisé en ce que
les alkoxysilanes de formules II à IV et les alkoxysilanes fonctionnels de formule I sont présents les uns avec les autres dans le rapport 0,02 ≤ M/Q ≤ 7.

6. Procédé selon l'une quelconque des revendications précédentes,
caractérisé en ce que
les alkoxysilanes de formules II à IV et les alkoxysilanes fonctionnels de formule I sont présents les uns avec les autres dans le rapport 0,1 ≤ M/Q ≤ 4.

7. Procédé selon l'une quelconque des revendications précédentes,
caractérisé en ce que
les surfaces du récipient en verre creux fraîchement préparé sont pourvues d'un traitement à chaud.

8. Procédé selon l'une quelconque des revendications précédentes,
caractérisé en ce que
la cire est mise en oeuvre sous forme de dispersion aqueuse.

9. Procédé selon l'une quelconque des revendications précédentes,
caractérisé en ce que
l'agent de revêtement utilisé contient jusqu'à 10 % en poids de co-solvants organiques.

10. Procédé selon l'une quelconque des revendications précédentes,
caractérisé en ce que
l'agent de revêtement utilisé est un système aqueux ayant une proportion de matières sèches allant de 0,1 à 8 % en poids.

11. Procédé selon la revendication 10,
caractérisé en ce que
la proportion de matières sèches est de 0,2 à 5 % en poids.

12. Procédé selon la revendication 10,
caractérisé en ce que
la proportion de matières sèches est de 0,5 à 3 % en poids.

13. Procédé selon l'une quelconque des revendications précédentes,
caractérisé en ce que
rapporté aux substances sèches, le rapport en poids de la composition contenant des organopolysiloxanes I au composant II dépourvu de silicium s'élève de 0,05 : 1 à 5.: 1.

14. Procédé selon la revendication 13,
caractérisé en ce que
le rapport en poids s'élève de 0,1 : 1 à 2 : 1.

15. Procédé selon l'une quelconque des revendications précédentes,
caractérisé en ce que
la composition contenant des organopolysiloxanes est contenue dans l'agent de revêtement pour au maximum 5 % en poids.

16. Procédé selon l'une quelconque des revendications précédentes,
caractérisé en ce que
la composition contenant des organopolysiloxanes dans l'agent de revêtement est contenue pour de 0,03 à 2 % en poids.

17. Procédé selon l'une quelconque des revendications précédentes,
caractérisé en ce que
la composition contenant des organopolysiloxanes est contenue dans l'agent de revêtement pour de 0,05 à 1 % en poids.

18. Procédé selon l'une quelconque des revendications précédentes,
caractérisé en ce que
la composition contenant des organopolysiloxanes est contenue dans l'agent de revêtement pour de 0,1 à moins de 1 % en poids.

19. Procédé selon l'une quelconque des revendications précédentes,
caractérisé en ce qu'
en supplément une autre couche d'un agent de traitement à froid connu est appliquée.

20. Procédé selon l'une quelconque des revendications 1 à 18,
caractérisé en ce qu'
en supplément une autre couche du même type est appliquée.

21. Procédé selon l'une quelconque des revendications précédentes,
caractérisé en ce que
la température des surfaces du verre se situe lors de l'application de l'agent de traitement à froid dans la plage de 30 à 150°C.

22. Procédé selon la revendication 21,
caractérisé en ce que
la température des surfaces du verre se situe dans la plage de 70 à 110°C.

23. Récipients en verre creux traités selon l'une quelconque des revendications précédentes.
